# DEMANDE DE BREVET EUROPEEN

(11) **EP 1 878 610 A1**
(43) Date de publication de la demande: **16.01.2008**
(21) Numéro de dépôt: 07112275.8
(22) Date de dépôt: 11.07.2007
(51) Int. Cl.: B60N 2/28

(54) **Système de siège pour enfant, élément de fixation et siège correspondants**

(30) Priorité: 11.07.2006 FR 0606319
(71) Demandeur: DOREL FRANCE SA, 49309 Cholet Cedex (FR)
(72) Inventeur: Rabeony, Haja, 49300, CHOLET (FR); Renaudin, Francois, 49300, CHOLET (FR)
(74) Mandataire: Bioret, Ludovic

(57) **Abrégé**

L'invention concerne un système de siège pour enfant destiné à être monté dans un véhicule automobile, comprenant un siège (2) et un élément de liaison (1) solidarisable à au moins un point d'attache dudit véhicule par l'intermédiaire de premières fixations, dans lequel l'élément de liaison (1) présente un boîtier apte à se solidariser au siège (2) par l'intermédiaire de secondes fixations disposées selon une direction sensiblement perpendiculaire aux premières fixations, ce boîtier étant de forme prévue pour s'inscrire dans un logement défini dans le siège (2) de façon à ce que, dans la position d'utilisation du système de siège, le siège (2) recouvre le boîtier (11) et que le boîtier (11) coopère avec le siège pour former une zone d'appui sur le véhicule.

## Description

### 1. Domaine de l'invention

Le domaine de l'invention est celui de la puériculture. Plus précisément, l'invention concerne les sièges pour enfant qui sont installés sur les sièges passagers des véhicules. Elle concerne en particulier la solidarisation de ces sièges pour enfant aux sièges des véhicules.

### 2. Solutions de l'art antérieur

Une grande partie des sièges pour enfant sont fixés sur un siège du véhicule par la ceinture de sécurité de ce siège. Ce mode de fixation présente plusieurs inconvénients. En particulier, le passage des sangles de la ceinture de sécurité dans les fixations du siège pour enfant est généralement assez complexe. Il est, en conséquence, assez difficile à mettre en oeuvre pour l'utilisateur. De plus, il ne permet pas facilement de vérifier que le siège pour enfant est correctement solidarisé.

Il arrive du coup trop souvent que le siège pour enfant ne soit pas solidarisé convenablement au véhicule, ce qui implique un risque important pour l'enfant qui y est assis, notamment en cas d'accident.

Depuis quelques années est apparu un nouveau type de sièges pour enfant répondant à la norme dite « Isofix » (marque déposée). Ces sièges pour enfant comportent des pinces de fixation qui viennent se solidariser sur des points d'ancrage prévus dans la structure du siège du véhicule. Un voyant permet de vérifier que les pinces de fixation sont correctement solidarisées sur les points d'ancrage du véhicule. Les risques de mauvaise fixation du siège au véhicule sont ainsi très réduits.

Cependant, ces sièges Isofix sont également difficiles à installer pour l'utilisateur. En effet, l'utilisateur qui désire placer dans son véhicule, généralement sur un siège arrière, un tel siège, doit amener les pinces Isofix jusqu'aux points d'ancrages correspondant. Les pinces Isofix sont généralement placées sur l'arrière du siège pour enfant, et les points d'ancrage se trouvent à la jonction entre l'assise du siège du véhicule et son dossier. Le passager doit, pour installer le siège, se placer devant celui-ci, dans une position souvent inconfortable et dans un espace souvent réduit. Les pinces de fixation ainsi que les points d'ancrage lui sont alors cachés par le siège pour enfant, qui est souvent assez volumineux. L'utilisateur doit donc, pour cette opération délicate de fixation du siège, agir en aveugle.

Un autre inconvénient des sièges pour enfant Isofix est que leur déverrouillage se fait par une simple action sur une commande de déverrouillage. Il existe un risque que cette commande de déverrouillage soit actionnée de manière intempestive. En particulier, il existe un risque de déverrouillage du siège alors qu'un enfant y est installé, par exemple par un autre enfant présent dans le véhicule. Il est donc nécessaire de prévoir des systèmes complexes de sécurité pour éviter un tel déverrouillage intempestif.

De plus, les fixations de type Isofix sont relativement complexes et coûtent cher à fabriquer. Leur coût augmente donc sensiblement le coût total d'un siège pour enfant. Plusieurs sièges étant nécessaires pour accompagner la croissance d'un enfant, l'utilisation de cette technologie Isofix revient globalement très cher aux utilisateurs.

Enfin, les sièges de type Isofix ne peuvent être utilisés que dans les véhicules comportant des points de fixation compatibles. Tous les véhicules n'étant pas équipés de ces points de fixation, il est parfois impossible d'installer ces sièges. Cela peut poser des problèmes, par exemple dans des véhicules de location, ou lorsque des parents confient leur enfant à des personnes dont le véhicule n'est pas équipé.

On connaît également des embases qui peuvent se fixer au véhicule par une fixation Isofix, et pouvant recevoir sur leur face supérieure un siège auto. Ces embases, qui sont plus larges que le siège auto qu'elles reçoivent afin de lui assurer une bonne stabilité, sont cependant très encombrantes. Elles se rajoutent donc en largeur à l'encombrement causé par le siège quand celui-ci est installé dans le véhicule, et diminuent la place disponible pour accueillir des passagers à côté d'un siège auto. De plus, ces embases présentent également un encombrement important quand elles ne sont pas installées, par exemple si elles sont rangées dans le coffre du véhicule.

### 3. Objectifs de l'invention

L'invention a notamment pour objectif de pallier ces inconvénients de l'art antérieur.

Plus précisément, un objectif de l'invention est de fournir un système permettant l'installation particulièrement facile d'un siège auto pour enfant, notamment de type Isofix, dans un véhicule.

Un autre objectif de l'invention est de réduire les risques de déverrouillage intempestif du siège pour enfant.

L'invention a également pour objectif de réduire le coût lié aux sièges pour enfant de type Isofix.

Encore un autre objectif de l'invention est de supprimer les problèmes d'incompatibilité entre les sièges pour enfant de type Isofix et les véhicules non équipés de points de fixation Isofix.

### 4. Exposé de l'invention

Ces objectifs, ainsi que d'autres qui apparaîtront par la suite, sont atteints à l'aide d'un système de siège pour enfant selon la revendication 1.

L'utilisateur peut ainsi fixer très facilement un élément de liaison, peu volumineux, aux points de fixation Isofix du véhicule, puis fixer le siège auto sur cet élément de liaison.

Selon l'invention, dans la position d'utilisation du système de siège, le siège recouvre le boîtier de l'élément de liaison.

L'élément de liaison n'est ainsi pas visible une fois que le siège est installé.

Selon un mode de réalisation particulier de l'invention, le logement comporte des éléments de centrage et/ou de guidage complémentaires d'éléments de centrage et/ou de guidage de l'élément de liaison, pour faciliter le positionnement du siège sur l'élément de liaison.

L'installation du siège sur l'élément de liaison est ainsi très facile, l'utilisateur n'ayant qu'à placer le siège au-dessus de l'élément de liaison puis à le verrouiller en s'aidant de la force de gravité.

Préférentiellement, l'élément de liaison comporte des moyens de déverrouillage des premières fixations, les moyens de déverrouillage étant montés sur le boîtier de façon à ce qu'ils ne soient pas accessibles quand le boîtier est solidarisé au siège.

Le risque d'un déverrouillage intempestif de la fixation de l'élément de liaison aux points de fixation Isofix du véhicule est donc supprimé, quand le siège est installé.

Selon un mode de réalisation préférentiel, l'élément de liaison comporte des moyens de détection du verrouillage correct desdites premières fixations empêchant la solidarisation du siège à l'élément de liaison quand les premières fixations ne sont pas correctement verrouillées.

Le risque de mauvaise installation du système de siège est ainsi très fortement réduit.

L'invention concerne également un siège pour un tel système de siège, comprenant un logement et des moyens de solidarisation aptes à coopérer avec l'élément de liaison.

Avantageusement, ce siège peut être fixé directement audit véhicule par les ceintures de sécurité de celui-ci quand le siège n'est pas solidarisé à l'élément de liaison.

Il est ainsi possible d'utiliser le même siège dans un véhicule qui n'est pas équipé de points de fixation Isofix.

L'invention porte également sur un élément de liaison pour un tel système de siège, qui présente un boîtier de forme prévue pour s'inscrire dans un logement défini dans le siège et pour se solidariser au siège par l'intermédiaire de secondes fixations disposées selon une direction sensiblement perpendiculaire aux premières fixations.

Avantageusement, ce boîtier peut coopérer avec plusieurs types de sièges, et notamment des sièges appartenant au groupe incluant les sièges pour enfant de groupe 0, les sièges pour enfant de groupe 1, les sièges pour enfant de groupe 2/3, les nacelles, les rehausseurs, les coques et/ou les embases.

Un utilisateur pourra ainsi acheter un seul élément de liaison qu'il pourra utiliser avec différent types de sièges, tout au long de la croissance de l'enfant. Le coût global lié à l'utilisation de la technologie Isofix est donc réduit pour l'utilisateur.

### 6. Liste des figures

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- la figure 1 représente un élément de liaison d'un système de siège pour enfant selon un mode de réalisation de l'invention ;
- la figure 2 représente un vue d'un siège pour enfant destiné à coopérer avec l'élément de liaison de la figure 1 ;
- la figure 3 représente un élément de liaison selon un autre mode de réalisation de l'invention, comportant des moyens de centrage ;
- la figure 4 représente en vue de coupe un système de siège pour enfant selon un mode de réalisation de l'invention.

### 6. Description détaillée de l'invention

### 6.1 Rappel du principe de l'invention

Le principe général de l'invention repose sur un élément de liaison comportant un boîtier muni de pince Isofix, le boîtier étant prévu pour venir se solidariser dans un logement correspondant du siège pour enfant.

### 6.2 Principe de l'élément de liaison

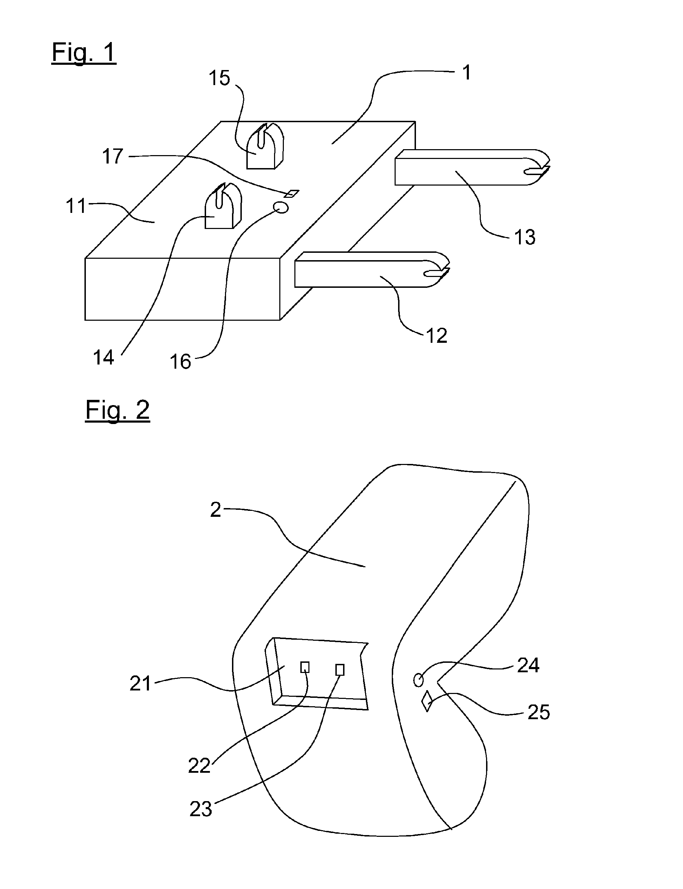

La figure 1 représente un élément de liaison destiné à permettre la solidarisation d'un siège pour enfant au siège d'un véhicule automobile. Cet élément de liaison 1 comporte un boîtier 11 sur lequel sont montés des premières fixations, constituées ici par deux pinces de type Isofix 12 et 13, destinées à permettre la solidarisation de l'élément de liaison 1 à des points d'ancrage solidaires de la structure du véhicule, selon une technique bien connue de l'homme du métier.

Le boîtier 11 présente une forme prévue pour s'inscrire dans un logement 21 défini dans le siège pour enfant 2 représenté par la figure 2. Des secondes fixations 14 et 15 sont prévues sur le boîtier 1 pour assurer la solidarisation de celui-ci dans le logement 21 du siège 2. Des éléments de fixation 22 et 23, complémentaires respectivement des fixations 14 et 15, sont prévus dans le logement 21.

L'utilisateur, quand il doit fixer le siège 2 au véhicule, doit dans un premier temps fixer au véhicule l'élément de liaison 1, indépendamment du siège 2 lui-même. Cette installation est facilitée par les faibles dimensions de cet élément de liaison 1. Du fait de ces faibles dimensions, l'utilisateur peut plus facilement diriger les pinces de fixation Isofix 12 et 13 jusqu'aux points de fixation correspondants du véhicule.

Le boîtier 11 comporte avantageusement un indicateur de bon verrouillage 16, lié aux fixations Isofix 12 et 13, qui indique quand les fixations sont correctement verrouillées aux points d'ancrage du véhicule. Il comporte également un bouton de commande de déverrouillage 17, qui permet d'actionner le déverrouillage des fixations 12 et 13. De tels indicateurs et de telles pinces sont bien connus de l'homme du métier.

Apres avoir fixé au véhicule l'élément de liaison 1, l'utilisateur doit venir fixer le siège 2 sur l'élément de liaison 1. Les secondes fixations 14 et 15 de l'élément de liaison étant disposées sensiblement perpendiculairement aux premières fixations 12 et 13, l'utilisateur peut amener le siège 2 au dessus de l'élément de liaison 1 pour recouvrir le boîtier 11 et l'amener dans le logement 21 en s'aidant de la force de gravité. Il est ainsi plus facile de placer le siège que dans les solutions de l'art antérieur.

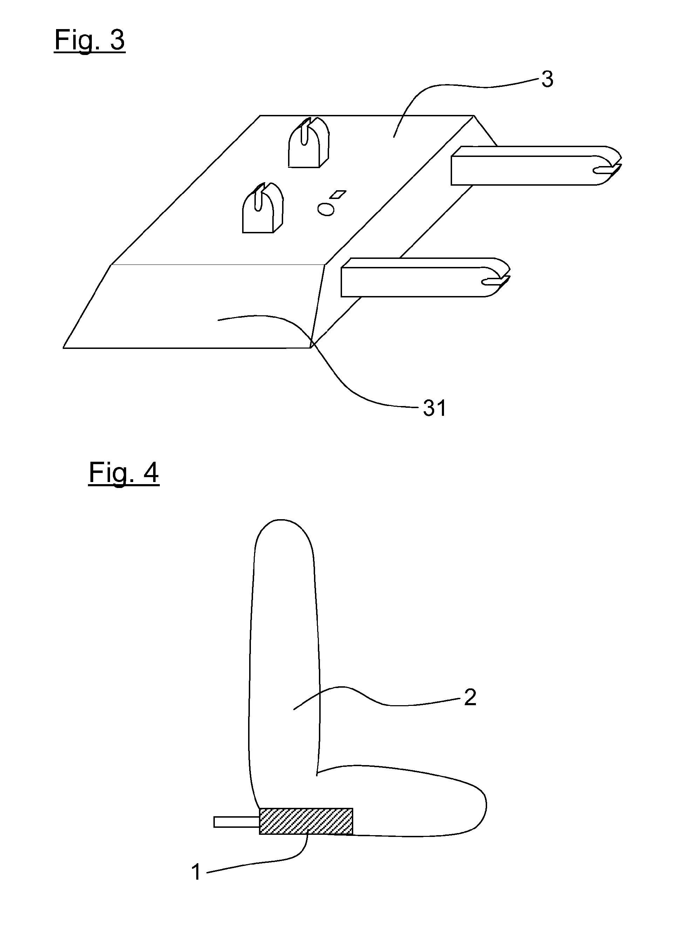

Pour faciliter cette étape, le boîtier peut comprendre des éléments de centrage de l'élément de liaison par rapport au siège, comme par exemple les plans inclinés 31 de l'élément de liaison 3 représenté par la figure 3. Dans ce cas, le logement prévu dans le siège est bien entendu d'une forme complémentaire.

Lorsque le boîtier 11 pénètre dans le logement 21, les secondes fixations 14 et 15 viennent se solidariser aux éléments de fixations complémentaires 22 et 23. Le siège 2 est alors assemblé à l'élément de fixation 1 comme le représente la figure 4. Les secondes fixations peuvent être reliées à un second indicateur de bon verrouillage 24 ainsi qu'à un second bouton de commande de déverrouillage 25, situés sur le siège 2 à un emplacement accessible quand le siège 2 est en place.

### 6.3 Autres caractéristiques et avantages

Le bouton de commande de déverrouillage 17 des fixations Isofix étant placé sur le boîtier 11, il n'est pas accessible aux utilisateurs quand le siège 2 est en place. Il est donc impossible de déverrouiller ces fixations de façon intempestive quand le siège est utilisé.

De plus, l'indicateur de bon verrouillage 16 peut être lié aux secondes fixations 14 et 15 de façon à empêcher le verrouillage de ces secondes fixations si les premières fixations 12 et 13 ne sont pas correctement solidarisées. L'utilisateur sera ainsi assuré, quand le siège 2 sera correctement verrouillé à l'élément de liaison 1, qu'il est également correctement verrouillé au siège du véhicule.

Si par hasard, pendant l'utilisation du siège, le bouton de déverrouillage 25 est actionné de façon intempestive, le poids de l'enfant assis dans le siège entraînera immédiatement le verrouillage des fixations 14 et 15. Le risque de déverrouillage intempestif est donc très faible. Au contraire, pour retirer le siège 2 du véhicule, l'utilisateur devra actionner le bouton 25 en soulevant le siège 2 pour désengager les secondes fixations 14 et 15 des éléments de fixation 22 et 23. Il devra, dans un second temps, retirer du véhicule l'élément de liaison 1.

Si le véhicule dans lequel le siège doit être installé n'est pas pourvu de points de fixation Isofix, il est possible également de fixer directement le siège 2 au siège du véhicule en utilisant les ceintures de sécurité, selon des techniques bien connues de l'homme du métier. Le siège 2 peut donc être utilisé aussi bien dans un véhicule compatible Isofix et dans un véhicule non compatible.

Enfin, l'élément de liaison 1 peut s'utiliser avec plusieurs types de siège, ou d'équipements de puériculture, par exemple une nacelle, une coque, un siège de groupe 0, ou une embase pour un tel siège, un siège de groupe 1, ou de groupe 2/3, ou encore un rehausseur. Tous ces équipements sont ici couverts par le terme générique « siège ». Ainsi, un utilisateur peut posséder différents sièges adaptés à l'age de son enfant, et utiliser successivement chacun de ces sièges en l'adaptant à un même élément de liaison. L'utilisateur n'a ainsi à payer qu'un seul équipement de fixation Isofix pour tous ces produits, ce qui lui permet de réaliser des économies.

Le fait que le boîtier soit recouvert par le siège auto, comme le représentent les figures, permet de rendre quasiment invisible le boîtier, ce qui permet de ne pas introduire de différence apparente entre un siège auto monté au véhicule par l'intermédiaire des ceintures de sécurité et le même siège auto monté à un véhicule par l'intermédiaire d'un élément de liaison selon l'invention.

En particulier, la hauteur du siège auto par rapport au siège du véhicule n'est pas modifiée par cet élément de liaison. Comme le représente la figure 4, la face inférieure de l'élément de liaison coopère en effet avec la face inférieure de l'assise du siège auto afin de former une zone d'appui du système de siège pour enfant sur le siège du véhicule.

La limitation de la hauteur du siège permet d'éviter d'élever le centre de gravité du système de siège par rapport au véhicule, ce qui permet une meilleure stabilité du siège et par conséquent une meilleure sécurité de l'enfant.

## Revendications

1. Système de siège pour enfant destiné à être monté dans un véhicule automobile, comprenant un siège (2) et un élément de liaison (1) solidarisable à au moins un point d'attache dudit véhicule par l'intermédiaire de premières fixations (12, 13),
**caractérisé en ce que** ledit élément de liaison (1) présente un boîtier (11) apte à se solidariser audit siège (2) par l'intermédiaire de secondes fixations (14, 15) disposées selon une direction sensiblement perpendiculaire auxdites premières fixations (12, 13),
ledit boîtier étant de forme prévue pour s'inscrire dans un logement (21) défini dans ledit siège (2) de façon à ce que, dans la position d'utilisation dudit système de siège, ledit siège (2) recouvre ledit boîtier (11) et que ledit boîtier (11) coopère avec ledit siège pour former une zone d'appui sur ledit véhicule.

2. Système de siège pour enfant selon la revendication 1, **caractérisé en ce que** ledit logement (21) comporte des éléments de centrage et/ou de guidage complémentaires d'éléments de centrage et/ou de guidage dudit élément de liaison, pour faciliter le positionnement dudit siège (2) sur ledit élément de liaison (1).

3. Système de siège pour enfant selon l'une quelconque des revendications 1 et 2, **caractérisé en ce que** ledit élément de liaison (1) comporte des moyens de déverrouillage desdites premières fixations (12, 13), lesdits moyens de déverrouillage étant montés sur ledit boîtier (11) de façon à ce qu'ils ne soient pas accessibles quand ledit boîtier (11) est solidarisé audit siège (2).

4. Système de siège pour enfant selon l'une quelconque des revendications 1 à 3, **caractérisé en ce que** ledit élément de liaison (1) comporte des moyens de détection du verrouillage correct desdites premières fixations (12, 13) empêchant la solidarisation dudit siège (2) audit élément de liaison (1) quand lesdites premières fixations (12, 13) ne sont pas correctement verrouillées.

5. Siège (2) pour un système selon l'une quelconque des revendications 1 à 14 **caractérisé en ce qu'**il comprend un logement (21) et des moyens de solidarisation (22, 23) aptes à coopérer avec ledit élément de liaison (1).

6. Siège (2) selon la revendication 5, **caractérisé en ce qu'**il peut être fixé directement audit véhicule par les ceintures de sécurité de celui-ci quand ledit siège (2) n'est pas solidarisé audit l'élément de liaison (1).

7. Elément de liaison (1) pour un système selon l'une quelconque des revendications 1 à 4 **caractérisé en ce qu'**il présente un boîtier (11) de forme prévue pour s'inscrire dans un logement (21) défini dans ledit siège (2) et pour se solidariser audit siège (2) par l'intermédiaire de secondes fixations (14, 15) disposées selon une direction sensiblement perpendiculaire auxdites premières fixations (12, 13).

8. Elément de liaison selon la revendication 7, **caractérisé en ce qu'**il peut coopérer avec plusieurs types de sièges, et notamment des sièges appartenant au groupe incluant :
o les sièges pour enfant de groupe 0 ;
o les sièges pour enfant de groupe 1 ;
o les sièges pour enfant de groupe 2/3 ;
o les nacelles ;
o les rehausseurs ;
o les coques ; et/ou
o les embases.
